# EUROPEAN PATENT SPECIFICATION

(11) **EP 2 288 959 B1**
(45) Date of publication and mention of the grant of the patent: **02.01.2019**
(21) Application number: 09742366.9
(22) Date of filing: 08.05.2009
(51) Int. Cl.: G03B 21/14

(54) **PROJECTION SCREEN AND METHOD OF CONSTRUCTION**
PROJEKTIONSSCHIRM UND KONSTRUKTIONSVERFAHREN
ÉCRAN DE PROJECTION ET PROCÉDÉ DE CONSTRUCTION

(30) Priority: 08.05.2008 GB 0808325; 08.05.2008 US 51397 P
(43) Date of publication of application: 02.03.2011
(73) Proprietor: Musion Ip Limited, London (GB)
(72) Inventor: O'CONNELL, Ian, Christopher, London (GB); HOWES, Alex, James, London (GB)
(74) Representative: Barker Brettell LLP
(86) International application number: PCT/GB2009/001155
(87) International publication number: WO 2009/136170

(56) References cited:
- WO-A-2005/096095
- WO-A-2006/125236
- GB-A- 479 913
- JP-A- 1 177 025
- JP-A- 2005 043 490
- US-A- 5 185 677
- US-A1- 2003 117 583

## Description

The invention relates to a retention member, a projection screen, an image projection apparatus and a method for constructing a projection screen. More particularly, but not exclusively, it relates to a projection screen bonded to a retention member, and a method for constructing such a screen.

The projection of an image upon a partially reflective and partially transparent screen such that it is observable by a viewer positioned in front of the screen is known as a "Pepper's ghost" arrangement from fairground shows.

Pepper's ghost projections have been used in publicity and promotional displays where a presenter resides behind an inclined, partially reflective partially transparent screen, typically a tensioned foil, onto which an image of, for example, a motor vehicle is projected, via at least one reflective surface, see for example EP 0799436. The location of the presenter behind the projected image has a number of inherent advantages over systems where the presenter stands in front of a screen, not least of which is that the presenter does not obscure the projected image when walking across the projected image. Additionally, the use of an inclined screen results in a viewer of the image perceiving the image as having depth rather than merely being a two dimensional image, for example where a motor vehicle is seen to rotate upon a turntable.

However, current image projection apparatus' do have a number of problems associated with them, for example, mounting of the foil can prove difficult which in turn leads to uneven tensioning of the foil and wrinkles upon the foil, that impair the viewed quality of the image. It is well known in the art that wrinkles inevitably form in a screen over a period of time with a resultant distortion of the projected image. Indeed, a wrinkle-free screen may be assembled in the evening, and by the following morning, wrinkles will have appeared as a result of the screen settling. Furthermore a change in conditions, such as humidity or temperature, can cause wrinkles to form in the space of minutes. In practice, it has been found that due to the thickness of large sized foils (e.g. 4 metre length foils are 88-110 microns thick and 5.5 metre length foils are approximately 50 microns thick) settling of the screen often only occurs after approximately 48 hours. When wrinkles appear, it is necessary to retension the screen and in particular the levels of tension required exceed those achievable by user force alone.

WO 2005/096095 (Musion Systems Limited) provides an apparatus capable of providing even tensioning of the foil by application of pressure at a plurality of positions along at least one edge of the screen. This apparatus requires placing an edge of the screen between jaws and passing a bolt through the screen. A nut is then threaded onto the bolt and tightened to hold the screen between the jaws. Tensioning is provided via straps which are attached to the jaws. Each of the tensioning straps can be tightened or loosened individually to allow an even tension to be applied over the whole of the screen.

There is becoming an ever increasing need for Pepper's ghost projections in more unusual locations and similarly a great need for larger projection images requiring larger screen sizes (such as those in excess of 5 metres in length). This is placing an increasing burden on the complexity of construction of a projection apparatus capable of projecting a high quality image.

US2003/117583A1 discloses a device for moving 3-dimensional objects in a projection space of a projection system. The projection system comprises a film which is clamped in a frame and inclined at an angle of 45° to the horizontal.

WO2006/125236A2 discloses a connecting device for connecting a textile or plastic surface element to a frame of a projection screen. A brim shaped edge of the connecting device protruding laterally beyond a locking part is welded to the surface element.

JP1177025A discloses the integration of a Fresnel lens screen with a lenticular lens screen by bonding or high frequency welding the screens together.

US5185677A discloses a transmission type projection screen assembly comprising a relatively thin flexible screen, and a plurality of small force receiving blocks fixed at spaced-apart positions in a horizontal row to the flexible screen along the upper and lower edges thereof. Spring devices are inserted between adjacent blocks so that constant horizontal tension is applied to the screen to prevent wrinkling and deflection thereof. A horizontal support beam is fixed to a screen support frame and suspendingly supports the flexible screen via the upper blocks, and a relatively rigid screen is placed in flush contact with the flexible screen and rests on the lower small blocks. The weight of the rigid screen applies vertical tension to the flexible screen so that wrinkling and deflection of the flexible screen is further prevented.

JP2005043490A discloses a semi-transparent biaxially oriented polymeric screen for a projector. Such polymeric films are also known as Hostaphan films (see for example www.m-petfilm.de/en/hostaphan-polyester-films).

According to a first aspect of the invention, there is provided a retention member, as defined in claim 1.

According to a second aspect of the invention, there is provided a projection screen, as defined in claim 8.

According to a third aspect of the invention, there is provided an image projection apparatus, as defined in claim 12.

According to a fourth aspect of the invention, there is provided a method for constructing a projection screen, as defined in claim 13.

Optional and/or preferred features are defined in the dependent claims.

The invention provides a simplified arrangement to that described in WO 2005/096095 and other projection screens. For example, a screen width of 12 metres would require approximately 44 holes to be made in the screen. This is not only time consuming but presents a large probability that the screen will be torn, damaged or the overall strength of the screen may be weakened. By contrast, the present invention provides a simplified arrangement wherein the retention members can be simply bonded to the screen at any point without the need for creating holes in the screen and weakening the screen. The resultant screen is therefore more likely to withstand the high tension loads (often as much as 250 kilos of load for every linear meter in width of the foil - thus a 4m x 4m foil requires 1 000 kilo of break strain to be applied) required to completely eliminate wrinkles without being damaged.

It will be appreciated that the retention member may comprise two separate retention members placed either side of the screen such that contact is achieved with both surfaces of the screen. However, in an alternative example, the retention member may comprise a single retention member extruded as a substantially U-shaped member such that contact is achieved on both surfaces of the screen. For example, the retention member may comprise a channel through which the screen may pass prior to being bonded thereto. In a further example the retention member may comprise a single retention member such that contact is achieved on a single surface of the screen.

It will be appreciated that the retention member may be constructed from a variety of materials desirably capable of withstanding the high pressures which will be exerted upon the screen during the tensioning process. In one example, the retention member may be constructed from a lightweight metal (e.g. aluminium) or a plastics material. The retention member may be made from a flexible material such that the retention member attached to the screen can be rolled about a cylinder, for example a cylinder having at least a 50cm diameter and preferably a diameter of between 80 to 100cm. This is advantageous as the retention member can be attached to the screen at one location and packaged for delivering to another location by rolling the screen and attached retention members about a cylinder. At the delivery location the screen and retention member can be simply unrolled and erected without the need for attaching the retention members and having the necessary tools for attaching the retention members at the delivery location. The retention members may be made of a plastic material that can be extruded. Extruding the retention members is advantageous as very long, for example 100m long, retention members can be formed such that there is no need to join separate retention members together to form a screen. Joining separate retention members together, such as steel retention members can undesirably result in wrinkles in the screen. In a further example, the retention member may be constructed from a plastics material, such as a plastics material (e.g. polyethylene terephthalate; PET).

The polymeric projection screen may be constructed from a lightweight material, such as polyester. The use of lightweight material is advantageous as it allows easy manipulation and mounting of the screen in a stage environment.

It will be appreciated that the bonding process may comprise any means for bonding of the retention member to the screen without requiring holes to be created in the screen. The bonding may be non-reversible.

The bonding may comprise a bonding that is suitable for use with polymeric materials, for example the use of welding such as ultrasonic welding.

The bonding may be provided by a single, continuous weld or a series of welds at a plurality of positions. Application of a continuous weld requires the screen to be laid on a flat surface which is not always possible or convenient for large sized screens in venues with limited space. Thus, the bonding may be provided by a series of welds (e.g. spot welds) at a plurality of positions. Spot-welds (e.g. ranging in size from approximately 2-3mm in diameter or greater, such as approximately 10 x 15mm) can be applied by portable welding equipment (e.g. ultrasonic welding equipment). Such equipment is readily available and will typically provide ultrasonic energy at a resonant frequency of between 20 and 40kHz. This enables simple attachment of a retention member to an edge of the screen.

In a non-claimed embodiment he bonding may comprise the use of a chemical agent (e.g. an adhesive). It will be appreciated that the chemical agent may be applied in an analogous manner to that of the ultrasonic welding described hereinbefore (i.e. in either a single, continuous application or a series of applications at a plurality of positions).

In a further non-claimed embodiment, the bonding may comprise the use of vacuum bonding. This will rely on the use of a material which upon application of pressure to the screen and retention member will create a vacuum bond between the retention member and the screen. Such vacuum bonding provides a simple and strong bonding mechanism. Examples of materials capable of providing such vacuum bonding are currently used in the manufacture of tennis rackets and cricket bats. It will be appreciated that the vacuum bonding may be provided by direct attachment of the retention member to the screen or it may be provided by indirect attachment of the retention member to the screen via the presence of an additional rubberised substrate between the retention member and the screen. This provides significant advantages over the other forms of bonding provided hereinbefore in that the bonding is reversible and can be re-used. Positioning of the retention members along one edge of the screen in a uniform manner can be a difficult task and the vacuum bonding will allow re-seating to ensure that the retention members are positioned in the optimum position. Furthermore, the bonding properties will remain even when subjected to the influences of heat and moisture. Additionally, the pressure required to form the vacuum bond is very low and therefore the screen is subjected to less tensile pressure and is less likely to be damaged during the bonding process. Although constructed in an entirely different manner to the screen apparatus described in WO 2005/096095, this document describes the presence of an abrasive coating (such as sandpaper) between the screen and the retention member to enhance the grip upon the screen. This abrasive coating causes significant scratching of the screen and in view of the thinness of the screen is very likely to damage the screen and weaken the overall strength of the material. Furthermore, if insufficient force is applied between the retention member and the screen, then the screen will slip and cause undesirable wrinkles in the screen. Thus, the abrasive coating provides a number of disadvantages each of which are solved by the claimed bonding arrangement.

In a further non-claimed embodiment, the bonding may comprise a first retention member composed of a magnetic material in co-operation with a second retention member composed of either a metallic or magnetic material. This magnetic bonding provides strong bonding by sandwiching the screen between two retention members in addition to providing a reversible bonding process. It will be appreciated that the magnetic material will be any suitable magnet capable of strong attachment to a corresponding metallic or magnetic material. Examples of magnetic materials include iron ore (magnetite or lodestone), cobalt, nickel, gadolinium, dysprosium and rare earth magnets such as samarium (e.g. samarium-cobalt) and neodymium (e.g. neodymium-iron-boron (NIB)) magnets. The magnetic material may be neodymium (e.g. neodymium-iron-boron (NIB)) magnet. In addition to the magnetic retention member, it is also envisaged that pre-existing metallic retention members can be secured to a screen using magnetic bolts made from a magnetic material as described hereinbefore for the magnetic bonding. For example, the nut and bolt arrangement may be replaced with a single magnetic bolt which holds the screen firmly in place without the need for tightening a nut to the bolt.

The retention member may be located along two opposing sides of the screen. However, it will be appreciated that the retention member need not run the entire length of the edge of the screen. For example, the length of the retention member may correspond to the length of the screen. Alternatively, the retention member may comprise a series of shorter lengths along the entire length of the screen. This will find applicability in a wide range of varying screen sizes and shapes, in particular non-convention shapes such as triangular, pentagonal, hexagonal or octagonal.

Once the retention member has been bonded to the screen as hereinbefore defined, the screen is then tensioned to remove all wrinkles. The tensioning process typically comprises attachment of a plurality of tensioning members to the screen by one end of the tensioning member, with the other end of the tensioning member being attached to a frame or truss member. The tensioning members typically comprise a strap or cord having a ratchet or friction locking buckle. The tensioning members will then be tightened or loosened to result in a wrinkle free screen.

A significant advantage of the bonding arrangement is provided when the screen is tensioned at two opposing sides. If a wrinkle subsequently appears then the bonded retention member described herein may be retrofitted to the screen at any of the remaining sides of the screen in order to simply and effectively remove the wrinkle. For example, pressure could be applied in a different direction to that previously applied which is more likely to remove the wrinkle than simply applying greater pressure in the existing direction. This arrangement of in situ addition of further retention members and tensioning members could not have been possible with the conventional arrangements without complete dismantling of the apparatus. The invention therefore represents a significant advance to current projection arrangements.

In a non-claimed embodiment, the screen may have one or more cut-out portions or apertures. These portions will be non-reflective and will typically enable a projector to be positioned such that the image can be beamed through the cut-out portion (or window). This arrangement provides the significant advantage that the "keystone effect" (the creation of elongated or distorted images occurring due to angled projection) is reduced. The cut-out portions may also allow miscellaneous props to be positioned on a live set which may protrude through the screen and create a more realistic 3-dimensional environment. Prior to the invention, these cut-out portions would not have been possible because of the restricted tensioning arrangements. The provision of the in situ addition of individual retention members at any position around the screen provides an effective manner of tensioning a screen to be wrinkle-free even when cut-out portions are present.

The retention members may comprise means for attachment of a plurality of tensioning members. In one embodiment, the attachment means comprise a plurality of apertures.

According to a non-claimed aspect there is provided a projection screen having a retention member configured, in use, to be in contact with at least one surface of the screen along at least a portion of at least one edge of said screen, the retention member may comprise a plurality of apertures, and a plurality of tensioning members extending through the apertures to apply tension to the screen, wherein a portion of each tensioning member that extends through one of the apertures to contact the retention member is flexible and non-resilient. In this way, forces applied by the tensioning members are substantially in a plane of the screen. In particular, any misalignment of the tensioning member between an attachment point and the plane of the screen that causes twisting of the tensioning member does not result in undue torsion forces being applied to the screen. For example, if the tensioning member comprised a rigid portion that passed through the aperture to contact the retention member, twisting of the tensioning member due to misalignment could result in the rigid portion jamming across the aperture, resulting in the torsion forces being transmitted to the screen. Such torsion forces could create imperfections, such as, wrinkles, in the screen.

A tensioning member may be threaded through the aperture and pressure may be applied to both ends of the tensioning member in the same direction. Such an arrangement provides a simplified attachment mechanism which also has the advantage of being lightweight due to the presence of the apertures. The apertures may be circular, oval or elongated slots. Alternatively, the apertures may be elongated slots.

Each tensioning member may comprise a further flexible and non-resilient portion away from a point of contact with the retention member. In this way, the tensioning member can twist between the attachment point and the retention member to compensate for any misalignment.

The tensioning members may be straps, such as canvas straps, cord or the like. The retention members may be configured to allow slidable engagement with the tensioning members.

According to another non-claimed aspect there is provided a projection screen having a retention member configured, in use, to be in contact with at least one surfaces of the screen along at least a portion of at least one edge of said screen, characterised in that the retention member may be configured to allow slidable engagement with a plurality of tensioning members configured to apply tension to the screen.

This provides the advantage that the tensioning members can be moved to any position. This arrangement overcomes the problem of removing a wrinkle which appears between the positions of two fixed tensioning members. A slidable tensioning member may be loosened, slid into the position of the wrinkle and then tensioned immediately to remove the wrinkle.

The first aspect of the invention provides the significant advantage of a self-tensioning apparatus. For example, the tension provided between each retention member will result in a wrinkle-free screen. The bias can be adjusted to remove/prevent appearance of wrinkles. For example, wrinkles may occur with changes in conditions, such as changes in humidity or temperature and/or due to slackening of the tension of the screen over time. The retention members may be disposed around the periphery of the screen to provide a self-supporting screen which neither requires rigging to a frame nor the addition of separate tensioning devices attached to the screen within the frame. This provides the significant advantage of providing a screen which is both self-supporting and self-tensioning. This arrangement is a significant departure from conventional projection apparatus and optimum results have been achieved with this aspect of the invention when the screen is circular.

The biasing means may comprise a spring or other resilient member. The mechanical means for manually increasing the biasing force may comprise a threaded nut which is able to extend or retract the distance between each retention member in order to adjust a desired amount of biasing force applied between each retention member.

The retention member may comprise two components which hold the screen in place via a clamping action.

The screen may be a foil. The screen may comprise a partially reflective layer upon at least one surface. The screen may be constructed from the same material as the retention member. The screen may be constructed from a plastics material (e.g. polyethylene terephthalate; PET). The screen may be constructed from a biaxially oriented plastic foil.

The biaxial stretching that occurs to the polymeric, such as polyester, extrusion during manufacturing enhances the mechanical properties of stiffness and strength by orienting the molecules in the foil. Of significance is the fact that this stretching process ensures that mechanical properties are roughly similar in the longitudinal direction (along the length of the screen roll) and the transverse direction across the width of the foil. It is this screen property which enables rigging of the screens when tension is generally applied in one direction only e.g. bottom to top or side to side. As the foil has roughly equal properties in both directions the wrinkles are removed fairly easily provided the foil is held stable in the top to bottom orientation as tension is applied.

If the foil is not biaxially oriented the wrinkles would be more difficult to remove when tension is applied only in one direction as the foil would tend to narrow across its width. This narrowing across its width (or length if tension is applied only side to side) can to a large extent be stabilized by the use of retention members applied to sandwich the edge region of a foil. The retention members may have bolts that pierce through the foil or have applied to their inner faces abrasive or bonding surfaces that once the retention member is applied, prevent slipping (or contracting) of the foil, preferably, not just in the direction that tension is applied but in all directions. Furthermore the slip control may extend to the far corners of the foil.

A further aspect to removing wrinkles in the screens is the need for high tension loads. The screens thus need to have sufficient mechanical properties to resist these loads otherwise the screens will stretch and tear. The molecular stretching process in the manufacture of biaxially oriented polymeric foils results in enhanced mechanical properties which are able to resist the high rigging loads. Screens made from biaxially oriented plastics are also superior to those manufactured from cast or blown film due to these better mechanical properties.

The biaxial foil may comprise a silver coating. The biaxial foil may be a contrast foil (a foil having a grey or black tint).

The light emitting device of the third aspect may be any light source which is capable of being reflected from an at least partially transparent screen. Examples of light emitting devices include a projector, a liquid crystal display (LCD) screen, a thin-film transistor (TFT) screen, a plasma screen or a light emitting diode (LED) wall (e.g. a high brightness LED wall of variable pitch ranging between 2-30mm between each LED).

The light emitting device can also include objects of stage and set design illuminated by a light that does not necessarily display image processing capabilities, as defined in claim 12.

The method of the fourth aspect may additionally comprises the steps of:
(c) attaching the at least a portion of at least one edge of said screen to a frame or truss member by one or more tensioning members; and
(d) applying tensile force to the one or more tensioning members.

The retention member may be made of flexible material and the method may further comprise rolling the projection screen around a cylinder. In this way, the projection screen can be delivered to a required location.

It will be appreciated that the features and elements of the invention described hereinbefore for the screen are also applicable to the method described hereinbefore.

For example, it will be appreciated that the method of the invention not only finds application in the initial construction of the screen but also in situ tensioning of the screen after construction in order to remove wrinkles during the settling process.

The invention will now be described, by way of example only, with reference to the accompanying drawings, in which:
**Figure 1** shows a front and side view of an ultrasonic bonded screen;
**Figure 2** shows a front and side view of the screen of figure 1 with the addition of an in situ retention member;
**Figures 3** **and** **4** show a front and side view of a vacuum bonded screen; and
**Figures 5 to 7** show differing views of the self-tensioning retention member.

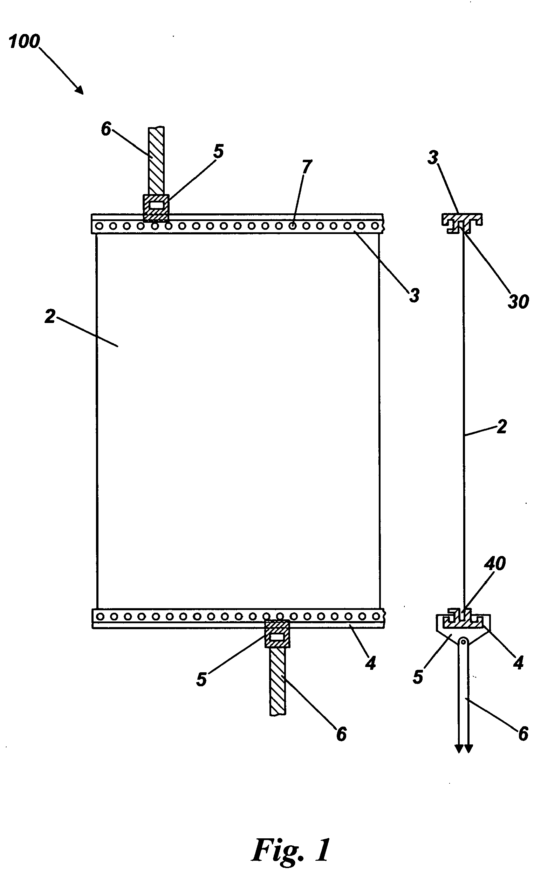

Referring first to Figure 1, a projection apparatus shown generally as 100, comprises a polymeric projection screen 2, retention members 3, 4, tensioning brackets 5, tensioning straps 6 and a series of ultrasonic spot-welds 7. The screen 2 is shown as a foil and the retention members 3, 4 are each shown as an extruded or moulded plastic (e.g. PET) gripper bar although it will be appreciated that other means of construction could be envisaged.

In use, the screen 2 is inserted into the extruded channel 30, 40 of each of the retention members 3, 4 and then ultrasonically bonded to create the series of spot-welds 7. The ultrasonic bonding will be created by a portable ultrasonic welding device comprising an ultrasonic horn backed by a small hand-held anvil. The horn is attached via a cable to a high frequency ultrasonic generator capable of generating ultrasonic energy in the range of 20 to 40 kHz. Each spot weld may typically range from approximately 2 to 3mm in diameter or greater and takes 1 to 2 seconds to create. The tensioning brackets 5 are configured to attach to the profiled cross-section of the retention members 3, 4 and tensile force can then be applied to the screen via the tensioning straps 6. The example shown in Figure 1 comprises the sliding tensioning member. For example, if wrinkles appear after settling of the screen, a tensioning strap may be loosened, slid to an appropriate position and then re-tensioned to remove the wrinkle. It will be appreciated that the sliding arrangement of the tensioning brackets constitutes an additional inventive feature and finds applicability in other forms of screen and retention member attachment.

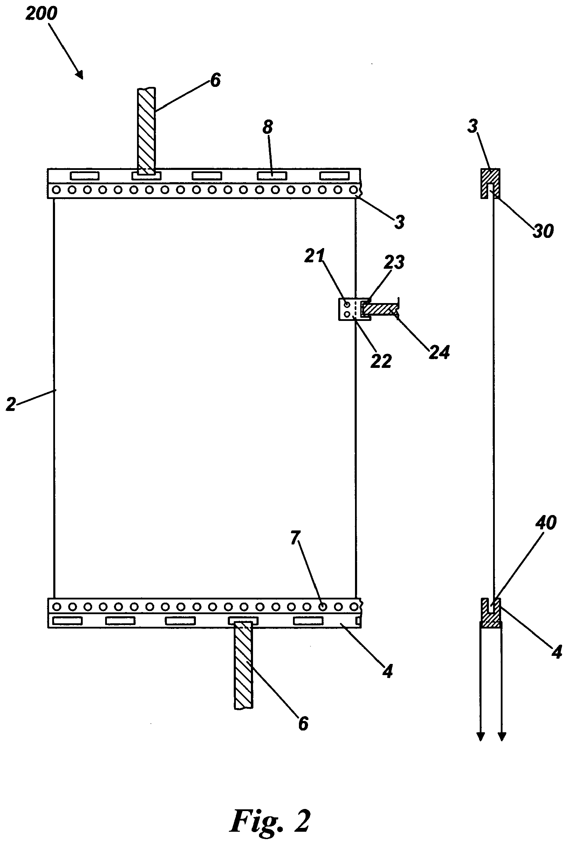

Figure 2 shows a projection apparatus shown generally as 200, comprising a polymeric projection screen 2, retention members 3, 4, tensioning straps 6, a series of ultrasonic spot-welds 7 and a series of elongated slots 8 within each of the retention members 3, 4. The screen 2 is shown as a foil and the retention members 3, 4 are each shown as an extruded or moulded plastic (e.g. PET) gripper bar although it will be appreciated that other means of construction could be envisaged. The tension straps 6 are flexible and non-resilient such that small misalignment between an attachment point and the plane of the screen 2 are compensated for by twisting of the tension straps 2 without applying undue forces to the screen 7. In particular, as a portion of the strap 6 that extends through the apertures 8 is flexible and resilient the straps do not apply significant lateral forces to the retention member if twisting of the strap 6 occurs. The forces applied by the tensioning straps 6 to the screen 2 are substantially in the plane of the screen 2.

In use, the screen is bonded to the retention members 3, 4 in an identical manner to that described for the screen of Figure 1. The tensioning arrangement in Figure 2 differs from Figure 1 in that a separate tensioning bracket is not required. Each tensioning strap 6 passes directly through the aperture 8 present in the retention members 3, 4. A further difference between Figure 1 and Figure 2 is the presence of a separate retention member which may be bonded after initial construction of the projection apparatus. In the event that a wrinkle appears following settling of the screen, an additional retention member 22 may be ultrasonically bonded to the screen 2 with spot-welds 21 at the exact position of the screen 2 which would easily facilitate removal of the wrinkle. The screen can then be tensioned by passing a tensioning strap 24 through an aperture 23 present in the retention member 22 and applying tensile force to the screen 2 to remove the wrinkle. It will be appreciated that the tensioning arrangement comprising apertues constitutes an additional inventive feature and finds applicability in other forms of screen and retention member attachment.

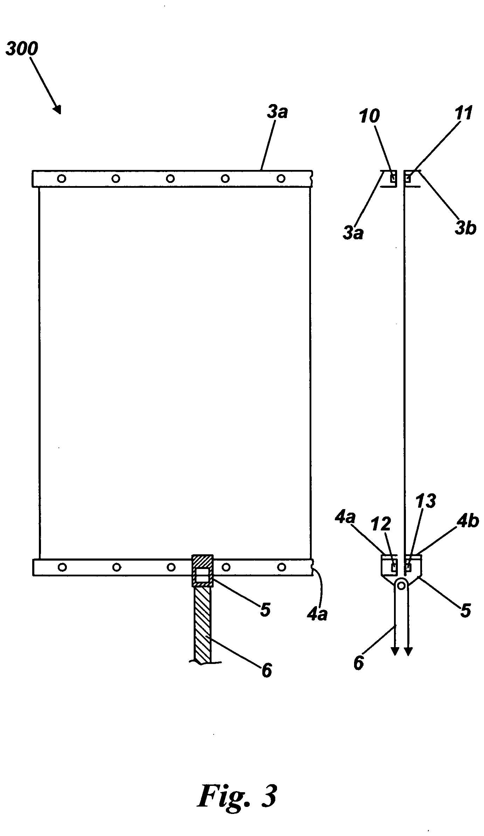

Figure 3 shows a projection apparatus shown generally as 300 according to a non-claimed embodiment, comprising a projection screen 2, retention members 3a, 3b, 4a and 4b, tensioning brackets 5, tensioning straps 6 and rubberised vacuum forming strips 10, 11, 12 and 13. The screen 2 is shown as a foil and the retention members 3a, 3b, 4a and 4b are each shown as extruded aluminium gripper bars although it will be appreciated that other means of construction could be envisaged.

In use, a rubberised vacuum forming strip 10 is placed against retention member 3a and a further rubberised vacuum forming strip 11 is placed against retention member 3b. One edge of the screen 2 is then positioned between the retention members 3a and 3b (such that the rubberised vacuum forming strips 11 and 12 are sandwiched between the retention members and one surface of the screen). Pressure is then applied to the edge of the screen in order to bond the screen 2 to the retention members 3a and 3b via a vacuum bonding process from the vacuum forming strips 10 and 11. The same process is then repeated for an opposing edge of the screen 2 using rubberised vacuum forming strips 12 and 13 and retention members 4a and 4b.

The example shown in Figure 3 comprises the sliding tensioning member exactly as described in Figure 1.

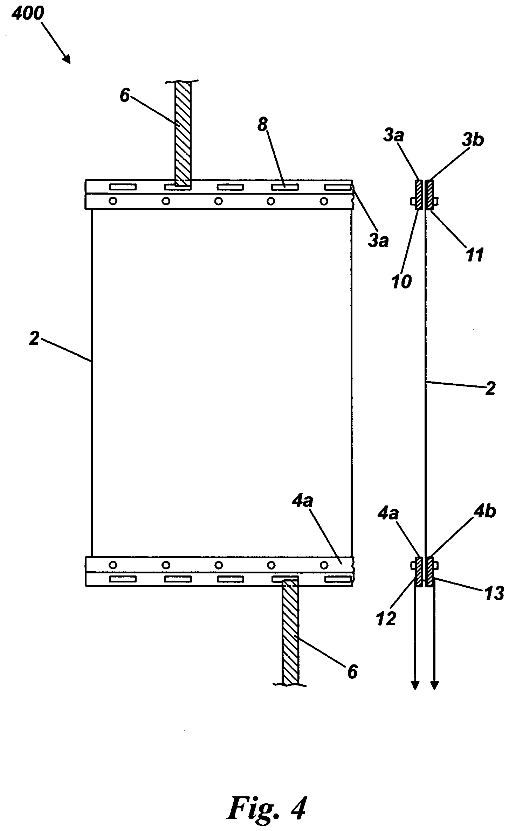

Figure 4 shows a projection apparatus shown generally as 400 according to a non-claimed embodiment, comprising a projection screen 2, retention members 3a, 3b, 4a and 4b, tensioning straps 6, a series of elongated slots 8 within each of the retention members 3a, 3b, 4a and 4b and rubberised vacuum forming strips 10, 11, 12 and 13. The screen 2 is shown as a foil and the retention members 3a, 3b, 4a and 4b are each shown as extruded aluminium gripper bars although it will be appreciated that other means of construction could be envisaged. The bonding process may be performed exactly as described in Figure 3 and the tensioning process may be performed exactly as described in Figure 2.

The rubberised vacuum forming strips 10, 11, 12 and 13 may be inserted between retention members on conventional projection apparatus (e.g. one which uses the disadvantageous fixing holes with bolts). In this example, the rubberised strips will simply replace the abrasive coating previously used to solve the aforementioned problems. It will be appreciated that in the event that bolts and fixing holes are present, in particular with the slidable tensioning arrangement, that the bolt-heads will be recessed within the retention member to allow sliding of the tensioning bracket.

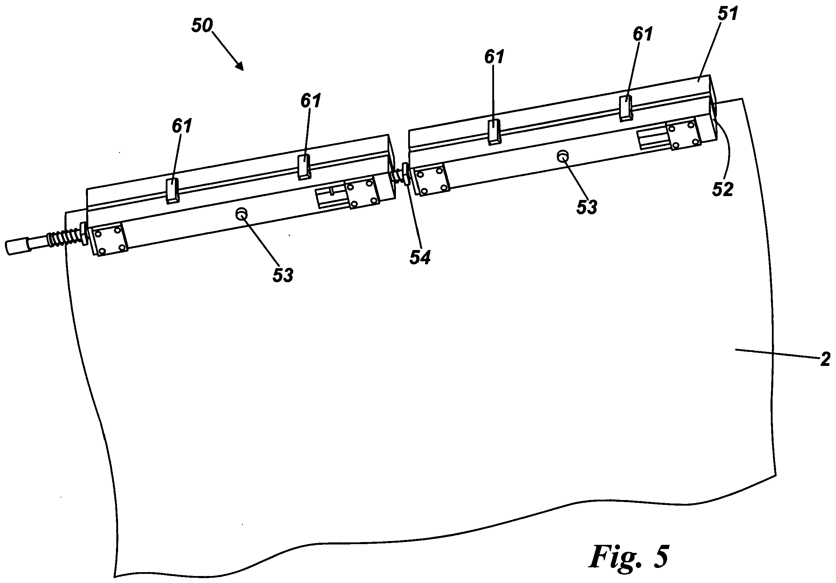

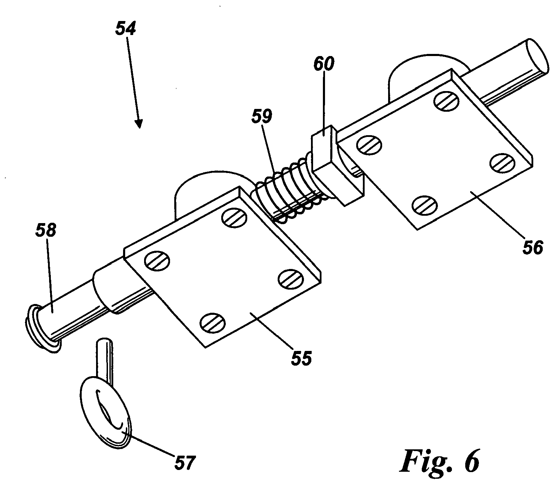

Figure 5 shows an example retention member 50 according to the first aspect. The retention member 50 comprises two components 51, 52 which are configured to sandwich the screen with a clamping action exerted by screw 53. C-section couplers 61 join members 51 and 52. The biasing means 54 are shown in greater detail in Figure 6 where it can be seen that they comprise two attachment means 55, 56 for attaching the biasing means 54 to two neighbouring retention members 50. The biasing means 54 also comprise a spring 59 which is held against a threaded nut 60. The biasing means 54 also comprise fixing holes 58 for receiving a pin 57 in order to bias the attachment means 55 in a fixed position if desired.

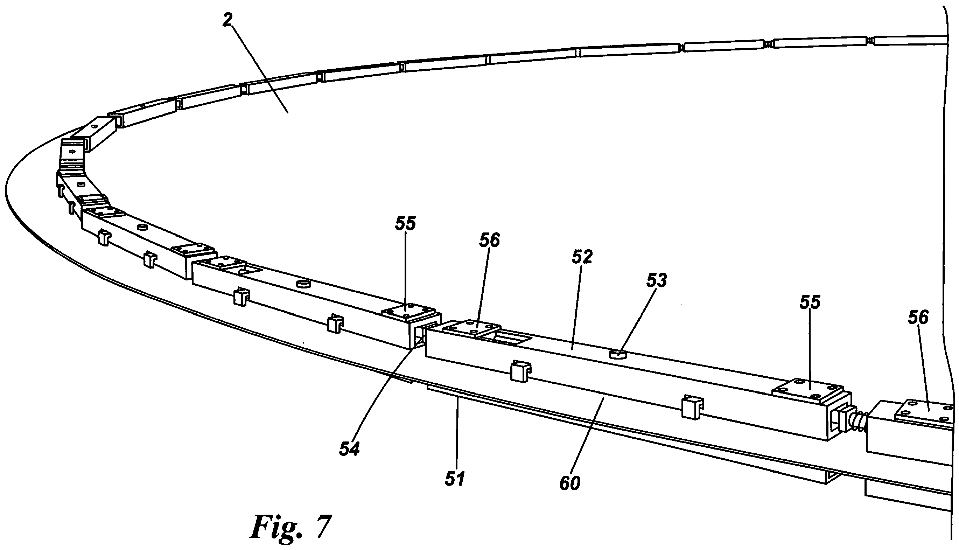

Figure 7 shows the self-tensioning example of the retention members attached to a screen 2, wherein in use, the two components 51, 52 of each retention member 50 are placed either side of the screen 2 and clamped together via tightening and clamped together via tightening of the screw 53. Each retention member 50 will then automatically be biased away from each neighbouring retention member 50 by the biasing means 54. If wrinkles occur in the screen or a greater level of tension is required than exerted naturally by the spring 59, then manual adjustment can be made by tightening or loosening the threaded nut 60.

It will be understood that the self-tensioning aspect of the invention is not limited to circular screens but may be applied to other shaped screens.

The projection screen may be a biaxially oriented polyester foil.

## Claims

1. A retention member (50) for holding a rollable projection screen (2), the retention member (50) configured, in use, such that contact is achieved on both surfaces of the screen (2), such that the retention member (50) is bonded to the screen without requiring holes to be created in the screen, the retention member (50) additionally comprising biasing means (54) configured, in use, to bias the retention member (50) away from a neighbouring retention member (50), the biasing means being adjustable to vary the bias applied to the retention member (50), wherein the biasing means (54) comprise mechanical means (60) for manually increasing a biasing force exerted between the retention member (50) and the neighbouring retention member (50).

2. A retention member (50) as defined in claim 1, further comprising two components (51, 52) configured to hold the screen in place via a clamping action.

3. A retention member (50) as defined in claim 1 or claim 2, wherein the biasing means (54) comprises a spring (59) or other resilient member.

4. A retention member (50) as defined in claim 1, 2 or 3, , wherein the retention member (50) is a substantially U-shaped member.

5. A retention member (50) as defined in any preceding claim, wherein the retention member (50) comprises means for attachment of a plurality of tensioning members (6).

6. A retention member (50) as defined in claim 5, wherein the attachment means comprise a plurality of apertures (8).

7. A retention member (50) as defined in any preceding claim, wherein the retention member (50) comprises a flexible material.

8. A rollable projection screen (2) comprising an at least partially transparent polymeric foil and a plurality of retention members (50) as defined in any one of claims 1 to 7.

9. A rollable projection screen (2) as defined in claim 8, which additionally comprises a partially reflective layer upon at least one surface.

10. A rollable projection screen (2) as defined in claim 8 or 9, wherein the polymeric foil comprises a biaxially oriented polymeric foil.

11. A rollable projection screen (2) as defined in claim 8, claim 9 or claim 10, wherein the retention members (50) are arranged substantially around the periphery of the screen (2).

12. An image projection apparatus comprising:
a light emitting device;
a screen (2) as defined in any of claims 8 to 11;
a frame configured to attach to each retention member (50), wherein the frame is arranged to retain the screen under tension, such that the screen (2) is inclined at an angle with respect to a plane of emission of light from the light emitting device and is substantially free from wrinkles;
the screen (2) having a front surface arranged such that light emitted from the light emitting device is at least partially reflected therefrom; and
the light emitting device being arranged to project an image such that light from the light emitting device impinges upon the front surface of the screen (2) such that a virtual image is created from light reflected from the screen (2), the virtual image appearing to be located behind the screen.

13. A method for constructing a projection screen (2) which comprises the steps of:
providing a projection screen (2) according to any one of claims 8 to 11;
attaching the projection screen (2) to a frame or truss member by one or more tensioning members (6); and
applying tensile force to the one or more tensioning members (6).

## Patentansprüche

1. Halteelement (50) zum Halten eines rollbaren Projektionsbildschirms (2), wobei das Halteelement (50) konfiguriert ist, sodass im Gebrauch ein Kontakt an beiden Oberflächen des Bildschirms (2) erreicht wird, sodass das Halteelement (50) mit dem Bildschirm verbunden ist, ohne dass Löcher in dem Bildschirm erzeugt werden müssen, wobei das Halteelement (50) zusätzlich ein Vorspannmittel (54) umfasst, das konfiguriert ist, um im Gebrauch das Halteelement (50) von einem benachbarten Halteelement (50) weg vorzuspannen, wobei das Vorspannmittel einstellbar ist, um die auf das Halteelement (50) aufgebrachte Vorspannung zu variieren, wobei das Vorspannmittel (54) mechanische Mittel (60) zum manuellen Erhöhen einer Vorspannkraft, die zwischen dem Halteelement (50) und dem benachbarten Halteelement (50) ausgeübt wird, umfasst.

2. Halteelement (50) nach Anspruch 1, weiter umfassend zwei Komponenten (51, 52), die konfiguriert sind, um den Bildschirm über eine Klemmwirkung an Ort und Stelle zu halten.

3. Halteelement (50) nach Anspruch 1 oder Anspruch 2, wobei das Vorspannmittel (54) eine Feder (59) oder ein anderes elastisches Element umfasst.

4. Halteelement (50) nach Anspruch 1, 2 oder 3, wobei das Halteelement (50) ein im Wesentlichen U-förmiges Element ist.

5. Halteelement (50) nach einem vorstehenden Anspruch, wobei das Halteelement (50) Mittel zum Befestigen einer Vielzahl von Spannelementen (6) umfasst.

6. Halteelement (50) nach Anspruch 5, wobei die Befestigungsmittel eine Vielzahl von Öffnungen (8) umfassen.

7. Halteelement (50) nach einem vorstehenden Anspruch, wobei das Halteelement (50) ein flexibles Material umfasst.

8. Rollbarer Projektionsbildschirm (2), umfassend eine zumindest teilweise transparente Polymerfolie und eine Vielzahl von Halteelementen (50) nach einem der Ansprüche 1 bis 7.

9. Rollbarer Projektionsbildschirm (2) nach Anspruch 8, der zusätzlich eine teilweise reflektierende Schicht auf zumindest einer Oberfläche umfasst.

10. Rollbarer Projektionsbildschirm (2) nach Anspruch 8 oder 9, wobei die Polymerfolie eine biaxial orientierte Polymerfolie umfasst.

11. Rollbarer Projektionsbildschirm (2) nach Anspruch 8, Anspruch 9 oder Anspruch 10, wobei die Halteelemente (50) im Wesentlichen um den Umfang des Bildschirms (2) angeordnet sind.

12. Bildprojektionsvorrichtung, umfassend:
eine lichtemittierende Vorrichtung;
einen Bildschirm (2) nach einem der Ansprüche 8 bis 11;
ein Rahmen, der zum Befestigen an jedem Halteelement (50) konfiguriert ist, wobei der Rahmen angeordnet ist, um den Bildschirm unter Spannung zu halten, sodass der Bildschirm (2) in einem Winkel in Bezug auf eine Lichtemissionsebene der lichtemittierenden Vorrichtung geneigt ist und im Wesentlichen frei von Falten ist;
wobei der Bildschirm (2) eine vordere Oberfläche aufweist, die angeordnet ist, sodass von der lichtemittierenden Vorrichtung emittiertes Licht zumindest teilweise von dieser reflektiert wird; und
wobei die lichtemittierende Vorrichtung angeordnet ist, um ein Bild zu projizieren, sodass Licht von der lichtemittierenden Vorrichtung auf die vordere Oberfläche des Bildschirms (2) auftrifft, sodass ein virtuelles Bild von dem Licht, das von dem Bildschirm (2) reflektiert wird, erzeugt wird, wobei das virtuelle Bild sich hinter dem Bildschirm zu befinden scheint.

13. Verfahren zum Aufbau eines Projektionsbildschirms (2), das die Schritte umfasst von:
Bereitstellen eines Projektionsbildschirms (2) nach einem der Ansprüche 8 bis 11;
Befestigen des Projektionsbildschirms (2) an einem Rahmen oder einem Verstrebungselement durch ein oder mehrere Spannelemente (6); und
Aufbringen von Zugkraft auf das eine oder die mehreren Spannelemente (6).

## Revendications

1. Elément de rétention (50) pour maintenir un écran de projection enroulable (2), l'élément de rétention (50) étant configuré, en service, de sorte qu'un contact soit assuré sur les deux surfaces de l'écran (2) afin que l'élément de rétention (50) soit lié à l'écran sans devoir ménager des trous dans l'écran, l'élément de rétention (50) comprenant en outre des moyens de sollicitation (54) configurés en service pour solliciter l'élément de rétention (50) afin de l'écarter d'un élément de rétention voisin (50), les moyens de sollicitation étant réglables pour faire varier la sollicitation appliquée à l'élément de rétention (50), dans lequel les moyens de sollicitation (54) comprennent des moyens mécaniques (60) pour augmenter manuellement une force de sollicitation exercée entre l'élément de rétention (50) et l'élément de rétention voisin (50).

2. Elément de rétention (50) selon la revendication 1, comprenant en outre deux composants (51, 52) configurés pour maintenir l'écran en place via une action de serrage.

3. Elément de rétention (50) selon la revendication 1 ou la revendication 2, dans lequel les moyens de sollicitation (54) comprennent un ressort (59) ou un autre élément élastique.

4. Elément de rétention (50) selon la revendication 1, 2 ou 3, dans lequel l'élément de rétention (50) est un élément sensiblement en forme de U.

5. Elément de rétention (50) selon l'une quelconque des revendications précédentes, dans lequel l'élément de rétention (50) comprend des moyens pour fixer une pluralité d'éléments de tension (6).

6. Elément de rétention (50) selon la revendication 5, dans lequel les moyens de fixation comprennent une pluralité d'ouvertures (8).

7. Elément de rétention (50) selon l'une quelconque des revendications précédentes, dans lequel l'élément de rétention (50) comprend un matériau souple.

8. Ecran de projection enroulable (2) comprenant une feuille polymère au moins en partie transparente et une pluralité d'éléments de rétention (50) selon l'une quelconque des revendications 1 à 7.

9. Ecran de projection enroulable (2) selon la revendication 8, qui comprend en outre une couche partiellement réfléchissante sur au moins une surface.

10. Ecran de projection enroulable (2) selon la revendication 8 ou 9, dans lequel la feuille polymère comprend une feuille polymère biaxialement orientée.

11. Ecran de projection enroulable (2) selon la revendication 8, la revendication 9 ou la revendication 10, dans lequel les éléments de rétention (50) sont agencés sensiblement autour de la périphérie de l'écran (2).

12. Appareil de projection d'image comprenant :
un dispositif électroluminescent ;
un écran (2) selon l'une quelconque des revendications 8 à 11 ;
un châssis configuré pour se fixer à chaque élément de rétention (50), dans lequel le châssis est agencé pour retenir l'écran sous tension de sorte que l'écran (2) soit incliné sous un certain angle par rapport à un plan d'émission de lumière par le dispositif électroluminescent et soit sensiblement exempt de rides ;
l'écran (2) ayant une surface avant agencée de sorte que la lumière émise par le dispositif électroluminescent en soit au moins en partie réfléchie ; et
le dispositif électroluminescent étant agencé pour projeter une image de sorte que la lumière issue du dispositif électroluminescent heurte la surface avant de l'écran (2) en sorte qu'une image virtuelle soit créée par la lumière réfléchie par l'écran (2), l'image virtuelle semblant être située derrière l'écran.

13. Procédé de construction d'un écran de projection (2) qui comprend les étapes consistant à :
fournir un écran de projection (2) selon l'une quelconque des revendications 8 à 11;
fixer l'écran de projection (2) à un élément de châssis ou de treillis par un ou plusieurs éléments de tension (6) ; et
appliquer une force de traction aux un ou plusieurs éléments de tension (6).
